# EUROPEAN PATENT APPLICATION

(11) **EP 1 808 682 A2**
(43) Date of publication of application: **18.07.2007**
(21) Application number: 07290014.5
(22) Date of filing: 05.01.2007
(51) Int. Cl.: G01L 3/10

(54) **Torque detection device and magnet fixing method**

(30) Priority: 11.01.2006 JP 2006004046
(71) Applicant: JTEKT Corporation, Osaka-shi Osaka 542-8502 (JP); DENSO CORPORATION, Kariya-shi, Aichi-ken, 448-8661 (JP)
(72) Inventor: Tokumoto, Yoshitomo, c/o JTEKT Corporation, Osaka-shi 542-8502 Osaka (JP); Ishihara, Toshiharu, c/o JTEKT Corporation, Osaka-shi 542-8502 Osaka (JP); Nakane, Naoki, Kariya-shi 448-8661 Aichi (JP)
(74) Representative: Bertrand, Didier

(57) **Abstract**

An inventive torque detection device includes: a magnetic circuit forming member having a tubular magnet provided at an outer circumferential portion of a first rotating body, and a magnetic ring that is located circumferentially of the tubular magnet and rotated together with a second rotating body connected to the first rotating body; a magnetic flux collecting ring part for collecting a magnetic flux generated by the magnetic circuit forming member; and a detection part for detecting, based on a density of the magnetic flux collected by the magnetic flux collecting ring part, a torque applied to the first or second rotating body, wherein the tubular magnet is formed by curing and magnetizing a synthetic resin, into which a magnetic powder is mixed, around the outer circumferential portion of the first rotating body.

## Description

### BACKGROUND OF THE INVENTION

The present invention relates to a torque detection device for detecting a torque applied to a rotating body, and to a method of fixing a magnet used for fabrication of the torque detection device, for example.

An exemplary torque detection device is disclosed in Japanese Patent Application Laid-Open No. 2005-69994 (which will be hereinafter simply called "conventional example"), for example. The torque detection device according to the conventional example includes: a magnetic circuit forming member having a tubular magnet provided at an outer circumferential portion of either one of input and output shafts connected via a torsion bar, and a magnetic ring that is located circumferentially of the tubular magnet and rotated together with the other one of the input and output shafts; a magnetic flux collecting ring part for collecting a magnetic flux generated by the magnetic circuit forming member; and a detection part for detecting, based on the density of the magnetic flux collected by the magnetic flux collecting ring part, a torque applied to the input shaft or the output shaft.

The torque detection device constructed in this manner is incorporated into an electric power steering device for a vehicle. The electric power steering device includes: an input shaft connected to a steering wheel; a housing for accommodating and supporting the input shaft; an electric motor connected to an output shaft via a deceleration mechanism; and a control unit which is connected to a circuit for driving the electric motor and a detection part, and in which a microprocessor is used. And the device is constructed so that the detection part detects, due to a torsion generated in a torsion bar, a rotational torque applied to the input shaft by the steering of the steering wheel, and the electric motor is driven and controlled based on the detected torque.

The tubular magnet according to the conventional example is provided by sintering ferrite powder into a tubular shape. However, when the sintered tubular magnet is externally fitted and fixed to the input shaft, a crack is likely to occur due to a radial inner pressure generated at an inner circumferential portion of the tubular magnet. To cope with this, according to the conventional example, the tubular magnet is molded with synthetic resin in advance, and the molded tubular magnet is externally fitted and fixed to a knurled portion of the input shaft, which is located at its outer circumferential portion, thereby preventing a crack during the assembly of the tubular magnet.

### BRIEF SUMMARY OF THE INVENTION

However, the torque detection device, in which the molded tubular magnet is externally fitted and fixed to the input shaft as in the conventional example, requires the step of molding the tubular magnet, and the step of fitting and fixing the molded tubular magnet. Therefore, the measures to improve the workability during assembly have been desired.

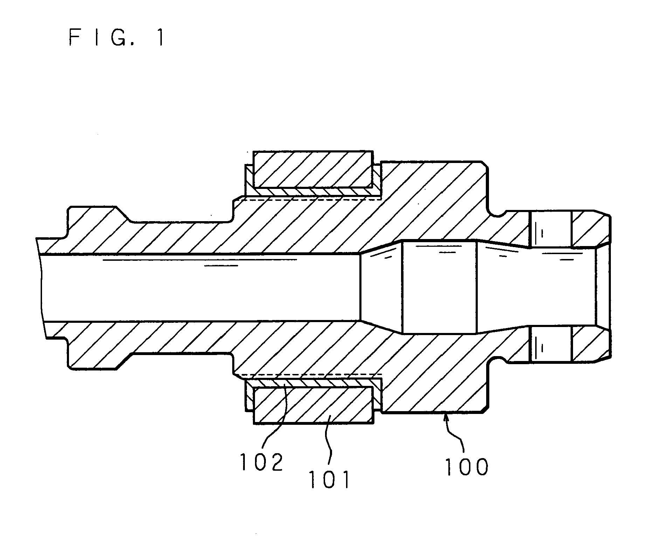

FIG. 1 is a partially enlarged cross-sectional view showing the constitution of an improved torque detection device. As shown in FIG. 1, the applicant of the present invention has developed the torque detection device constructed in the following manner. An input shaft 100, and a tubular magnet 101, formed by sintering ferrite powder into a tubular shape, are held in a cavity of a molding die, and molten synthetic resin is injected into the cavity, thus molding an inner circumferential portion of the tubular magnet 101, and fixing the tubular magnet 101 to an outer circumferential portion of the input shaft 100 via a mold layer 102.

The torque detection device constructed in this manner can reduce the number of steps required for the assembly of the tubular magnet compared with the torque detection device according to the conventional example. However, since many working process steps are still required for allowing the input shaft to include the magnet, the measures to further improve the workability during the assembly have been desired.

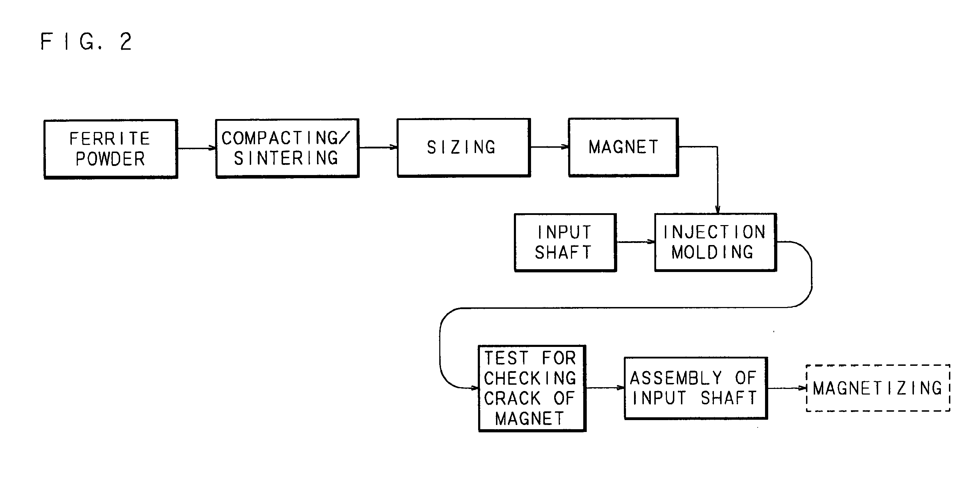

FIG. 2 is a flow chart illustrating the working process steps required for allowing an input shaft to include a tubular magnet. The illustrated working process includes the following five steps of:
(1) preparing ferrite powder;
(2) compacting and sintering the ferrite powder to obtain a tubular magnet;
(3) sizing the sintered tubular magnet;
(4) inserting and positioning the sized tubular magnet and an input shaft into a cavity of a molding die to inject synthetic resin into the cavity, thus fixing the tubular magnet to the input shaft; and
(5) carrying out a test to determine whether a crack is caused in the tubular magnet.

However, if the tubular magnet is fixed to the input shaft via a mold layer, the molding pressure of the molten synthetic resin, injected into the cavity, is applied to an inner circumferential face of the tubular magnet, and due to this molding pressure, a crack might occur in the tubular magnet.

The present invention has been made in view of the above-described problems, and its main object is to provide a torque detection device and a magnet fixing method which can further reduce the number of working process steps required for allowing a rotating body to include a magnet, and which can prevent a crack from being caused in the magnet due to a molding pressure.

A torque detection device according to a first aspect of the present invention includes: a magnetic circuit forming member having a magnet provided at an outer circumferential portion of a first rotating body, and a magnetic ring that is located circumferentially of the magnet and rotated together with a second rotating body connected to the first rotating body; a magnetic flux collecting ring part for collecting a magnetic flux generated by the magnetic circuit forming member; and a detection part for detecting, based on a density of the magnetic flux collected by the magnetic flux collecting ring part, a torque applied to the first or second rotating body, the device characterized in that the magnet is formed by curing and magnetizing a synthetic resin into which a magnetic powder is mixed.

The torque detection device according to the first aspect of the present invention makes it possible to provide a magnet at a rotating body by only one working process in which the first rotating body is inserted and positioned into a cavity of a molding die to inject a synthetic resin, mixed with a magnetic powder, into the cavity, thus enabling the reduction in the number of working process steps. Accordingly, the working efficiency of allowing the rotating body to include the magnet can be improved, and thus the cost can be reduced. Moreover, since a synthetic resin mixed with a magnetic powder is used as the magnet, a cracking in the magnet due to a molding pressure in the cavity can be prevented.

The torque detection device according to a second aspect of the present invention is characterized in that the magnetic powder is neodymium, and the magnet is provided by injection molding.

In the torque detection device according to the second aspect of the present invention, the amount of magnetic flux per unit area provided by neodymium magnetic powder is greater than that of magnetic flux per unit area provided by other magnetic powder, and thus a relatively strong magnetic force can be obtained. Therefore, it is possible to detect a torque with high precision without significantly amplifying a torque detection signal, detected by the detection part, with the use of an amplifier. Accordingly, it is possible to use a low-sensitive amplifier, and to eliminate the need for a magnetic shield for this amplifier, thus enabling the reduction in the indirect cost.

The above and further objects and features of the invention will more fully be apparent from the following detailed description with accompanying drawings.

### BRIEF DESCRIPTION OF THE SEVERAL VIEWS OF THE DRAWINGS

FIG. 1 is a partially enlarged cross-sectional view showing the constitution of an improved torque detection device;
FIG. 2 is a flow chart illustrating working process steps required for allowing an input shaft to include a tubular magnet;
FIG. 3 is a cross-sectional view of a torque detection device according to the present invention, inserted into a housing;
FIG. 4 is a perspective view of the torque detection device according to the present invention;
FIG. 5 is a schematic exploded perspective view of the torque detection device according to the present invention;
FIG. 6 is a diagram for describing a magnetic circuit generated when a rotating body is rotated in one direction; and
FIG. 7 is a flow chart illustrating working process steps required for allowing a first rotating body to include a tubular magnet.

### DETAILED DESCRIPTION OF THE INVENTION

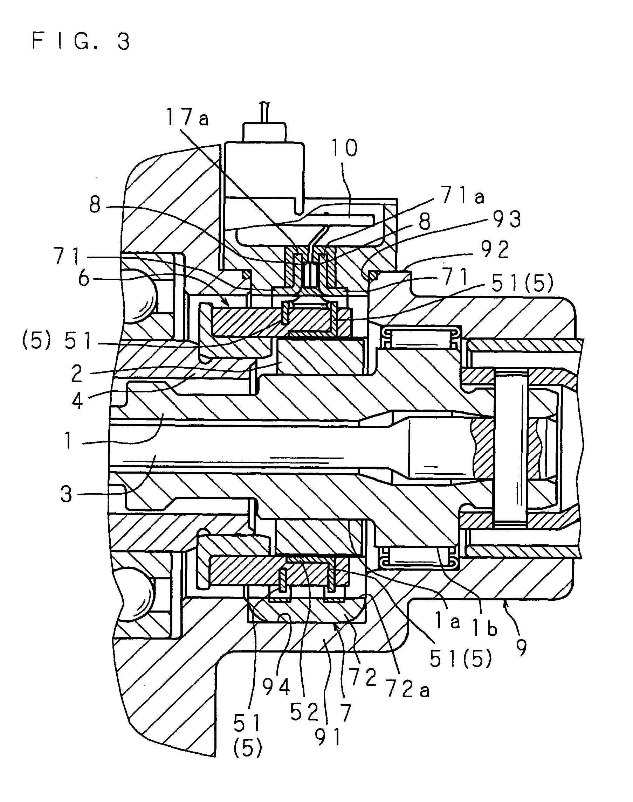

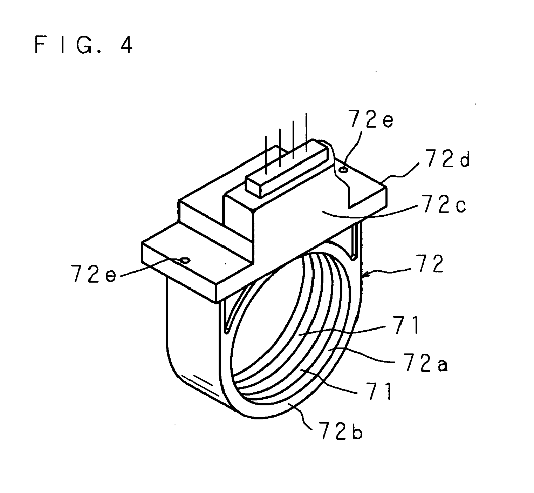

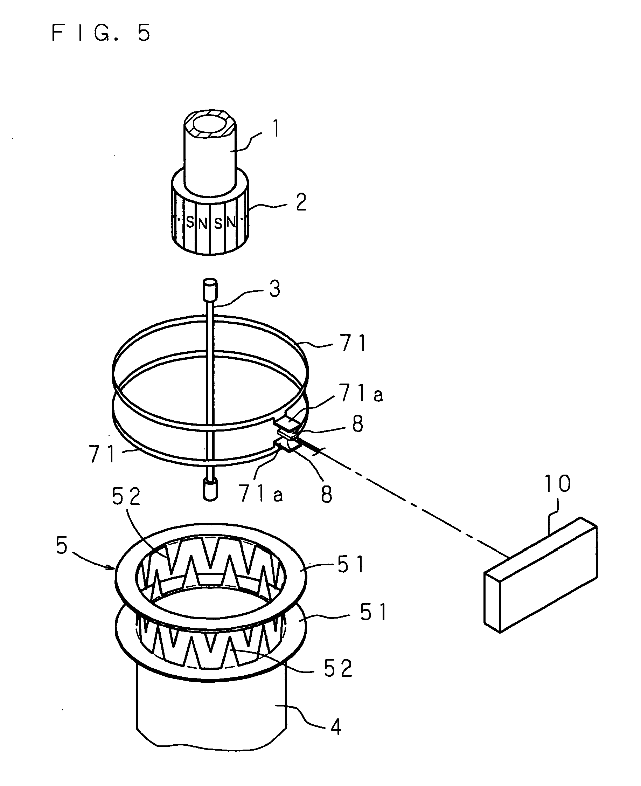

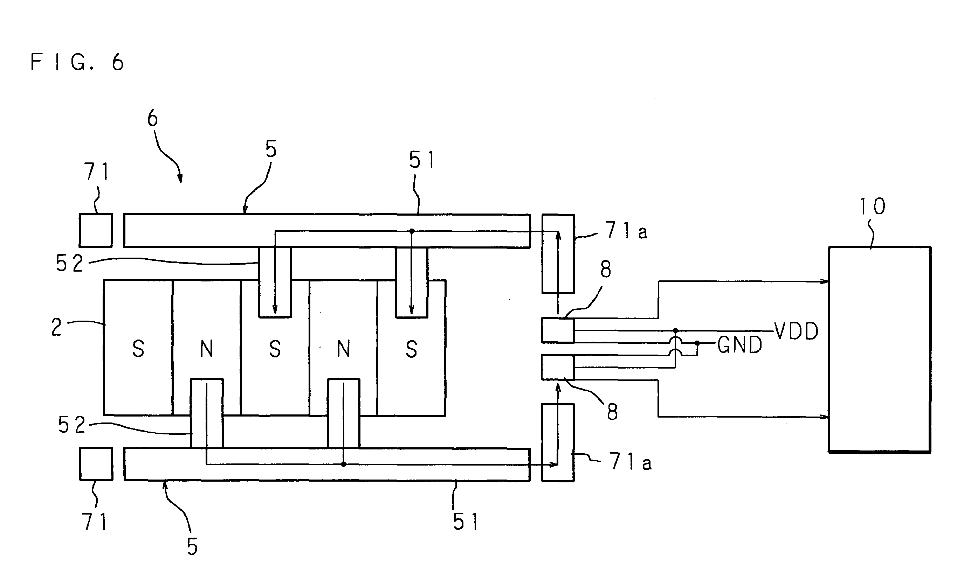

Hereinafter, embodiments of the present invention will be described in detail with reference to the drawings. FIG. 3 is a cross-sectional view of a torque detection device according to the present invention, inserted into a housing 9. FIG. 4 is a perspective view of the inventive torque detection device. FIG. 5 is a schematic exploded perspective view of the inventive torque detection device. And FIG. 6 is a diagram for describing a magnetic circuit generated when a rotating body is rotated in one direction.

An inventive torque detection device includes: a magnetic circuit forming member 6 having a tubular magnet 2 fixed to an outer circumferential portion of a first rotating body 1, and two magnetic rings 5, 5 that are located circumferentially of the tubular magnet 2 and rotated together with a second rotating body 4 connected coaxially with the first rotating body 1 via a torsion bar 3; a magnetic flux collecting ring part 7 for collecting a magnetic flux generated by the magnetic circuit forming member 6; and a detection part 8 for detecting, based on the density of a magnetic flux collected by the magnetic flux collecting ring part 7, the torque applied to the first rotating body 1.

The first rotating body 1 is provided, at its outer circumferential part, with: a magnet fixing portion 1a to which the magnet is fixed; and a bearing fitting portion 1b that is continuous with the magnet fixing portion 1a via a radial step. The magnet fixing portion 1a is provided with concavity and convexity, e.g. a knurled surface, so that the displacement of the fixed tubular magnet 2 can be prevented.

The tubular magnet 2 is formed into a multi-pole magnetized cylinder in which north and south poles are alternately magnetized in circumferential positions, and is provided by allowing synthetic resin mixed with neodymium magnetic powder to be cylindrically cured around the magnet fixing portion 1a. Since the amount of magnetic flux per unit area provided by neodymium is greater than that of magnetic flux per unit area provided by ferrite, it is possible to obtain a relatively strong magnetic force.

The magnetic rings 5, 5 have: two opposing annular plates 51, 51 separated from each other in the axial direction of the second rotating body 4; and a plurality of comb teeth 52, 52 extended close to each other from inner circumferential portions of the annular plates 51, 51. And the magnetic rings 5, 5 are formed so that the magnetic flux density between the magnetic rings 5, 5 is changed due to the relative rotation with the tubular magnet 2. Furthermore, the comb teeth 52, 52 are arranged at equal intervals such that they intermesh alternately in the circumferential direction, and the magnetic rings 5, 5 are molded with synthetic resin in the state where the comb teeth 52, 52 intermesh alternately, thus providing a molded body.

The magnetic flux collecting ring part 7 includes: two magnetic flux collecting rings 71, 71 arranged so as to be axially separated from each other; and a holding ring 72 for holding each of the magnetic flux collecting rings 71, 71 by molding them. The magnetic flux collecting rings 71, 71 form a cylindrical shape having convex pieces 71a, 71a extended radially outward from circumferential portions of the magnetic flux collecting rings 71, 71 so as to be located on both sides of the detection part 8, thus allowing the convex pieces 71a, 71a to collect a magnetic flux. Moreover, the magnetic flux collecting rings 71, 71 are a formed magnetic plate such as a steel plate.

The holding ring 72 has : a through hole 72a corresponding to inner circumferential faces of the magnetic flux collecting rings 71, 71; a ring body 72b to which the magnetic flux collecting rings 71, 71 are fitted and fixed; and an attachment portion 72c protruded at an outer circumferential portion of the ring body 72b. The ring body 72b and the attachment portion 72c are integrally molded with synthetic resin. The ring body 72b is located within the housing 9 as shown in FIG. 3. On the other hand, the attachment portion 72c is located outwardly of the housing 9, and is attached to an attachment seat 92 of the housing 9. The attachment portion 72c has a flange 72d protruded orthogonally to a portion extended in the tangential direction of the ring body 72b. A detection circuit board 10 connected to the detection part 8 is accommodated inside the attachment portion 72c. The flange 72d is provided with insertion holes 72e, 72e through which small screws are to be inserted.

The detection part 8 includes a Hall element whose electrical characteristic (resistance) varies in accordance with a change in the magnetic flux density generated between the convex pieces 71a, 71a of the magnetic flux collecting rings 71, 71, and is configured so as to change a detection signal in accordance with a change in the magnetic flux density generated between the convex pieces 71a, 71a of the magnetic flux collecting rings 71, 71. A detection signal from the detection part 8 is sent to the detection circuit board 10. It should be noted that other than a Hall element, the detection part 8 may alternatively have a magnetic sensing element whose electrical characteristic (resistance) varies due to a magnetic field effect, such as a magnetoresistance effect element (MR element); therefore, a constituent element of the detection part 8 is not limited to a Hall element.

The housing 9 has: a cylindrical part 91 surrounding the magnetic circuit forming member 6; the attachment seat 92 which is protruded at an outer circumferential portion of the cylindrical part 91, and to which the holding ring 72 is to be attached; a through hole 93 that radially passes through the attachment seat 92 and that forms a rectangular cross section for allowing the magnetic flux collecting rings 71, 71 and the ring body 72b to be located inside the cylindrical part 91; and a fitting groove 94 that is continuous with the through hole 93 and is bent in a manner corresponding to the shape of the ring body 72b of the holding ring 72.

The attachment seat 92 is formed into a rectangular annular shape and is opposed to the flange 72d. The attachment seat 92 is provided with two screw holes corresponding to the insertion holes 72e, 72e.

The tubular magnet 2 is provided by carrying out injection molding. This injection molding is carried out in the following manner. Neodymium powder is mixed into an uncured synthetic resin, and then the synthetic resin mixed with the neodymium powder is injected into a cavity of a molding die in which the first rotating body 1 is inserted and positioned in advance. In this manner, the synthetic resin mixed with the neodymium powder is cylindrically molded and cured around the magnet fixing portion 1a, thus providing the tubular magnet 2 that is integral with the first rotating body 1. In the molded tubular magnet 2, north and south poles are alternately magnetized (i.e., multi-pole magnetized) in circumferential positions.

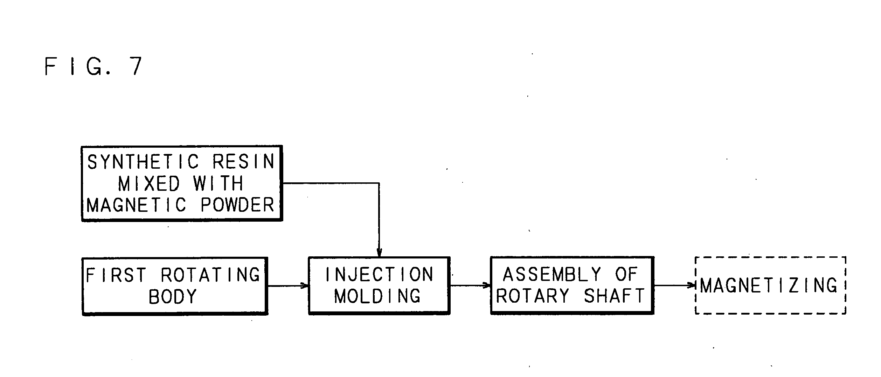

FIG. 7 is a flow chart illustrating working process steps required for allowing the first rotating body 1 to include the tubular magnet 2. As illustrated in the flow chart, the working process steps, required for allowing the first rotating body 1 to include the tubular magnet 2, consist of only the following two steps of:
(1) preparing synthetic resin into which neodymium is mixed as magnetic powder; and
(2) inserting and positioning the first rotating body 1 into a cavity of a molding die, and injecting the synthetic resin mixed with the neodymium into the cavity to mold and cure the resin, thus obtaining the tubular magnet 2.

In these working process steps, since a tubular magnet formed in advance by sintering, for example, is not used, no cracking occurs in the tubular magnet 2 due to the molding pressure. Furthermore, there is no need to carry out a test to determine whether a crack is caused in the tubular magnet 2.

In the torque detection device constructed as described above, the ring body 72b of the holding ring 72 is inserted into the cylindrical part 91 through the through hole 93 that radially passes through the cylindrical part 91 of the housing 9, and the ring body 72b is allowed to engage with the fitting groove 94, thus determining the position of the magnetic flux collecting rings 71, 71 inside the cylindrical part 91, and attaching the flange 72d of the holding ring 72 to the attachment seat 92 by using small screws. Thereafter, the first rotating body 1 holding the tubular magnet 2 and the second rotating body 4 holding the magnetic rings 5 are inserted into the cylindrical part 91 from the axial direction of the cylindrical part 91 so that the tubular magnet 2 and magnetic rings 5 are located inwardly of the magnetic flux collecting ring part 7. Furthermore, the detection circuit board 10 is connected to a control unit provided by including a microprocessor. A circuit, through which this control unit and the detection circuit board 10 are connected, is further connected with an amplifier for amplifying a detection signal detected by the detection part 8.

Since the tubular magnet 2 of the torque detection device assembled as described above is molded with the synthetic resin into which neodymium powder is mixed, the amount of magnetic flux per unit area is large, and thus a relatively strong magnetic force can be obtained. Therefore, it is possible to detect a torque with high precision by using a low-sensitive amplifier. Moreover, it is possible to eliminate the need for a magnetic shield for an amplifier, and to reduce the indirect cost. For example, in the case where the torque detection device is used for an electric power steering device, in combination with the above-mentioned reduction in the number of the working process steps, the cost of the electric power steering device can be further reduced.

It should be noted that although neodymium is used as magnetic powder in the above-described embodiment, ferrite may alternatively be used, and therefore, magnetic powder to be used is not limited to a particular material.

## Claims

1. A torque detection device comprising: a magnetic circuit forming member (6) having a magnet (2) provided at an outer circumferential portion of a first rotating body (1), and a magnetic ring (5) that is located circumferentially of the magnet (2) and rotated together with a second rotating body (4) connected to the first rotating body (1); a magnetic flux collecting ring part (7) for collecting a magnetic flux generated by the magnetic circuit forming member (6); and a detection part (8) for detecting, based on a density of the magnetic flux collected by the magnetic flux collecting ring part (7), a torque applied to the first rotating body (1) or the second rotating body (4),
the torque detection device **characterized in that** the magnet (2) is formed by curing and magnetizing a synthetic resin into which a magnetic powder is mixed.

2. The torque detection device according to Claim 1,
wherein the magnetic powder is neodymium, and the magnet (2) is provided by injection molding.

3. A method of fixing a magnet (2) at an outer circumferential portion of a rotating body (1), the method **characterized by** comprising the steps of:
mixing a magnetic powder into a synthetic resin;
inserting and positioning the rotating body (1) into a cavity of a molding die; and
injecting the synthetic resin, mixed with the magnetic powder, into the cavity to mold and cure the synthetic resin.

4. The magnet fixing method according to Claim 3, further comprising the step of:
alternately magnetizing north and south poles in circumferential positions of the molded magnet (2).

5. The magnet fixing method according to Claim 3 or 4,
wherein the magnetic powder is neodymium.
